# EUROPEAN PATENT SPECIFICATION

(11) **EP 2 296 479 B1**
(45) Date of publication and mention of the grant of the patent: **23.04.2014**
(21) Application number: 09754110.6
(22) Date of filing: 28.05.2009
(51) Int. Cl.: A01N 65/36, A23L 3/3463, A23L 3/3472, A23B 7/154

(54) **VAPOUR OF A CITRUS ESSENTIAL OIL BLEND AND ITS ANTIMICROBIAL PROPERTIES**
DAMPF EINER ÄTHERISCHEN CITRUSÖLMISCHUNG UND SEINE ANTIMIKROBIELLEN EIGENSCHAFTEN
VAPEUR D'UN MÉLANGE D'HUILES ESSENTIELLES D'AGRUMES ET SES PROPRIÉTÉS ANTIMICROBIENNES

(30) Priority: 30.05.2008 GB 0809935
(43) Date of publication of application: 23.03.2011
(73) Proprietor: The University Of Northampton, Northampton NN2 7AL (GB)
(72) Inventor: PHILLIPS, Carol, Northampton NN2 7AL (GB); LAIRD, Katie, Northampton NN2 7AL (GB)
(74) Representative: Cottrill, Emily Elizabeth Helen
(86) International application number: PCT/GB2009/001345
(87) International publication number: WO 2009/144465

(56) References cited:
- WO-A2-02/100372
- WO-A2-2005/048718
- DE-A1- 4 125 558
- DE-C1- 4 125 559
- FISHER K ET AL: "The effect of lemon, orange and bergamot essential oils and their components on the survival of Campylobacter jejuni, Escherichia coli O157, Listeria monocytogenes, Bacillus cereus and Staphylococcus aureus in vitro and in food systems" JOURNAL OF APPLIED MICROBIOLOGY, vol. 101, no. 6, December 2006 (2006-12), pages 1232-1240, XP002594222 ISSN: 1364-5072 DOI: DOI:10.1111/J.1365-2672.2006.03035.X cited in the application
- FISHER K ET AL: "The survival of three strains of Arcobacter butzleri in the presence of lemon, orange and bergamot essential oils and their components in vitro and on food" LETTERS IN APPLIED MICROBIOLOGY, vol. 44, no. 5, May 2007 (2007-05), pages 495-499, XP002594223 ISSN: 0266-8254 DOI: DOI:10.1111/J.1472-765X.2006.02106.X cited in the application
- FISHER ET AL: "Potential antimicrobial uses of essential oils in food: is citrus the answer?" TRENDS IN FOOD SCIENCE AND TECHNOLOGY, vol. 19, no. 3, 23 November 2007 (2007-11-23), pages 156-164, XP022477185 GB ISSN: 0924-2244 DOI: 10.1016/J.TIFS.2007.11.006 cited in the application
- DABBAH R ET AL: "Antimicrobial Action of Some Citrus Fruit Oils on Selected Food-Borne Bacteria" APPLIED MICROBIOLOGY, vol. 19, no. 1, January 1970 (1970-01), pages 27-31, XP002594224 ISSN: 0003-6919
- BELLETTI NICOLETTA ET AL: "Evaluation of the antimicrobial activity of citrus essences on Saccharomyces cerevisiae" JOURNAL OF AGRICULTURAL AND FOOD CHEMISTRY, vol. 52, no. 23, 16 October 2004 (2004-10-16), pages 6932-6938, XP002594225 ISSN: 0021-8561 DOI: 10.1021/jf049444v
- MANDALARI G ET AL: "Antimicrobial activity of flavonoids extracted from bergamot (Citrus bergamia Risso) peel, a byproduct of the essential oil industry" JOURNAL OF APPLIED MICROBIOLOGY, vol. 103, no. 6, 1 December 2007 (2007-12-01), pages 2056-2064, XP002466986 Oxford GB ISSN: 1364-5072 DOI: 10.1111/J.1365-2672.2007.03456.X
- GAUNT L F ET AL: "Interaction of air ions and bactericidal vapours to control micro-organisms" JOURNAL OF APPLIED MICROBIOLOGY, vol. 99, no. 6, 2005, pages 1324-1329, XP002594226 ISSN: 1364-5072 DOI: 10.1111/j.1365-2672.2005.02729.x
- BURT S.: "Essential Oils: their antibacterial properties and potential applications in foods - a review" INTERNATIONAL JOURNAL OF FOOD MICROBIOLOGY, vol. 94, no. 3, 1 January 2004 (2004-01-01), pages 223-253, XP008056620 Amsterdam NL ISSN: 0168-1605 DOI: 10.1016/J.IJFOODMICRO.2004.03.022 cited in the application

## Description

The present invention relates to the vapour of a blend of essential oils and the antimicrobial properties of the vapour. The vapours have application within the fresh/organic fruit, vegetable and salad sector of the food industry, the horticultural industry and the clinical arena.

### Background of the Invention

Between 1992 and 2006, 2274 foodborne outbreaks, of food poisoning were reported in England and Wales, 4% of which were associated with the consumption of prepared salads. Fresh salad, vegetables, or fruit may become contaminated from environmental sources, and only in recent years has the association of foods from origins other than animal been associated with foodborne illness, demonstrating that health problems can arise from consumption of contaminated salads, fruits and vegtables (as reported in Little, C. L. & Gillespie, I. A. (2008) Prepared salads and public health. Journal of Applied Microbiology, In Press). This is of concern because the organic sector of the food market has a retail value of £223million and is one of the fastest growing sectors with an increase of 30% per annum from the 1990's to 2000. Although this has now began to slow to 15%, thought to be due to downward price pressures from the supermarket supply chain. Yet if the Organic Action Plan Target plan is to be met with 70% of the indigenous organic products to be sourced from the UK by 2010, progress within the sector is required, including a natural antimicrobial that can go some way to reducing the contamination and post harvest decay of salads, fruits and vegetables (see DEFRA (2006) The UK organic vegetable market (2004-2005 season)).

The numbers of antibiotic resistant bacteria are on the increase and an alternative to antibiotics needs to be found. There were 1,087 reported cases of MRSA bloodstream infections in England during the October to December quarter of 2007, showing a 0.6% increase on the previous quarter (Health Protection Agency (2008) Latest figures show MRSA bloodstream infections plateau. Available from.www.hpa.org.uk). In 2005 in the UK there were 7066 reported cases of *Enterococcus* spp. bacteraemia; 28% of all cases were antibiotic resistant (Health Protection Agency (2007) Bacteraemia. Available from.www.hpa.org.uk/cdr/pages/bacteraemia.htm#entero). The risk of death from vancomycin resistant *Enterococcus* (VRE) is 75% compared with 45% for individuals infected with a vancomycin susceptible strain (Bearman, G. M. L. & Wenzel, R. P. (2005) Bacteraemias: A leading cause of death. Archives of Medical Research, 36, (6) 646-659). This is mirrored in the USA: in a fifteen year period there was a 20-fold increase in VRE associated with nosocomial infections reported to CDC's National Nosocomial Infections Surveillance (NNIS) (National Nosocomial Infection Surveillance (2004) Systam report, data summary from January 1992 through June 2004, issued October 2004. A report from the NNIS System. American Journal of Infection Control, (32) 470-485*)*

essential oils (EOs) *per se* and their antimicrobial properties have been reviewed extensively and natural plant compounds such as spices, herbs and essential oils are known to inhibit growth of food-poisoning bacteria (Tassou, C. C. & Nychas, G. J. E. (1995) Antimicrobial activity of the essential oil of mastic gum (Pistacia lentiscus var. chia) on Gram positive and Gram negative bacteria in broth and in Model Food System. International Biodeterioration & Biodegradation, 36, (3-4) 411-420, Smith-Palmer, Stewart & Fyfe (1998) Antimicrobial properties of plant essential oils and essences against five important food-borne pathogens. Letters in Applied Microbiology, 26, (2) 118-122, Tassou, C., Koutsoumanis, K. & Nychas, G. J. E. (2000) Inhibition of Salmonella enteritidis and Staphylococcus aureus in nutrient broth by mint essential oil. Food Research International, 33, (3-4) 273-280, Inouye, S., Takizawa, T. & Yamaguchi, H. (2001) Antibacterial activity of essential oils and their major constituents against respiratory tract pathogens by gaseous contact. Journal of Antimicrobial Chemotherapy, 47, 565-573, Burt, S. (2004) Essential oils: their antibacterial properties and potential applications in foods--a review. International Journal of Food Microbiology, 94, (3) 223-253 and Lanciotti, R., Gianotti, A., Patrignani, F., Belletti, N., Guerzoni, M. E. & Gardini, F. (2004) Use of natural aroma compounds to improve shelf-life and safety of minimally processed fruits. Trends in Food Science & Technology, 15, (3-4) 201-208). The antimicrobial properties of EOs vapours, however, have been relatively unexplored.

Citrus essential oils/vapours and their components are recognised as "Generally Recognised As Safe" (GRAS) by the FDA, suggesting that they can have usage within both the clinical and food arena. Preliminary studies have shown bergamot, lemon and orange alone in vapour form to have antimicrobial properties against a range of Gram-negative and Gram-positive bacteria including *Campylobater jejuni, Escherichia coli* 0157, *Listeria monocytogenes, Bacillus cereus* and *Staphylococcus aureus* (K. Fisher et al (2007), The Survival of three strains of Arcobacter butzleri in the presence of lemon, orange and bergamot essential oils and their components in vitro and on food, Letters in Applied Microbiology, 44, (5), 495-499 and K. Fisher, C.A. Phillips (2006) The effect of lemon, orange and bergamot essential oils and their components on the survival of Campylobacter jejuni, Escherichia coli O157, Listeria monocytogenes, Bacillus cereus and Staphylococcus aureus in vitro and in food systems Journal of Applied Microbiology 101 (6), 1232-1240).

A review of potential antimicrobial uses of essential oils in food can be found in Trends in Food Science & Technology Volume 19, Issue 3, March 2008, Pages 156-164 (Katie Fisher and Carol Phillips, Potential antimicrobial uses of essential oils in food: is citrus the answer?).

### Summary of Invention

We have discovered a vapour of a blend of citrus essential oils that is antimicrobial against a range of Gram-positive and Gram-negative bacteria, including antibiotic-resistant strains, and that is also active against bacterial spores. The vapour can be used on food and no sensory changes occur. The vapour can also be used to control food contaminated with microorganisms.

The vapour acts on surfaces including those of fresh food produce to reduce contamination by pathogens.

It is to be understood that the term "antimicrobial" as used in this specification, means "capable of destroying or inhibiting the growth of microorganisms". The microorganism may be a bacterium, virus, rickettsia, yeast or fungus.

According to a first aspect of the present invention, there is provided a vapour of a blend consisting of the oil of orange and the oil of bergamot. By "oil of orange" or "orange oil", it is meant *Citrus sinensis.* By "oil of bergamot" or "bergamot oil", it is meant *Citrus bergamia.*

Suitably, the orange oil and bergamot oil are present in the blend in a ratio of 1:1 volume:volume.

In an embodiment, the vapour of the blend consisting of the oil of orange and the oil of bergamot comprises the following components: methanol, ethanol, acetone, isopropanol, fluoroacetic acid amine, trimethylsilyl fluoride, dimethylsilanediol, 3-heptanone, butylacetate, n-octanal, p-cymene, limonene, alpha-pinene, alpha-phellandrene, camphene, thujene, beta pinene, myrcene, carene, nonanal, nonanol, citral, linalool, 1-fluorododecane, bergamol and linalyl isobutyrate. Typically, the GCMS analysis of the vapour is as follows:

| Components | m/z** | Counts/min |
|---|---|---|
| Methanol | 33 | 1279 |
| Ethanol | 47 | 391 |
| Acetone | 59 | 71682 |
| Isopropanol | 60 | 2236 |
| Fluoroacetic acid amine | 77 | 4505 |
| Trimethylsilyl fluoride | 92 | 58* |
| Dimethylsilanediol | 92 | 58* |
| 3-heptanone | 114 | 43 |
| Butylacetate | 116 | 110 |
| n-octanal | 128 | 57 |
| p-cymene | 134 | 342 |
| Limonene | 136 | 54440* |
| Alpha-pinene | 136 | 54440* |
| Alpha-phellandrene | 136 | 54440* |
| Camphene | 136 | 54440* |
| Thujene | 136 | 54440* |
| Beta pinene | 136 | 54440* |
| Myrcene | 136 | 54440* |
| Carene | 136 | 54440* |
| Nonanal | 142 | 36 |
| Nonanol | 144 | 36 |
| Citral | 154 | 186* |
| Linalool | 154 | 186* |
| 1-Fluorododecane | 188 | 27* |
| | | |
| Bergamol | 196 | 26 |
| Linalyl isobutyrate | 224 | 25 |

| | | |
|---|---|---|
| * Combined peak for all components of the same molecular weight. ** m/z = mass to charge ratio | | |

It has surprisingly been found that the vapour of the blend of oils has synergistic antimicrobial properties compared to the antimicrobial properties of the oils alone. Furthermore, when the vapour of the blend is is exposed to foodstuffs, it does not affect the taste or smell of the food. Thus, the vapour may be useful as a food preservative as it has an antimicrobial effect without tainting the food. Furthermore, the vapour is effective at relatively high temperatures, for example temperatures ranging from 25°C to 50°C. Thus, the vapour may also be useful as an antimicrobial in greenhouses.

According to another aspect of the present invention, there is provided a process for preparing a vapour of a blend consisting of the oil of orange and the oil of bergamot, the process comprising heating the blend to a temperature of 30 to 50 °C for a period of time of ranging from 10 minutes to 20 minutes. Preferably, the blend is heated for 15 minutes. The vapour described above may be prepared according to this process.

The liquid blend (i.e. prior to vapourisation) has the following major components according to GCMS:

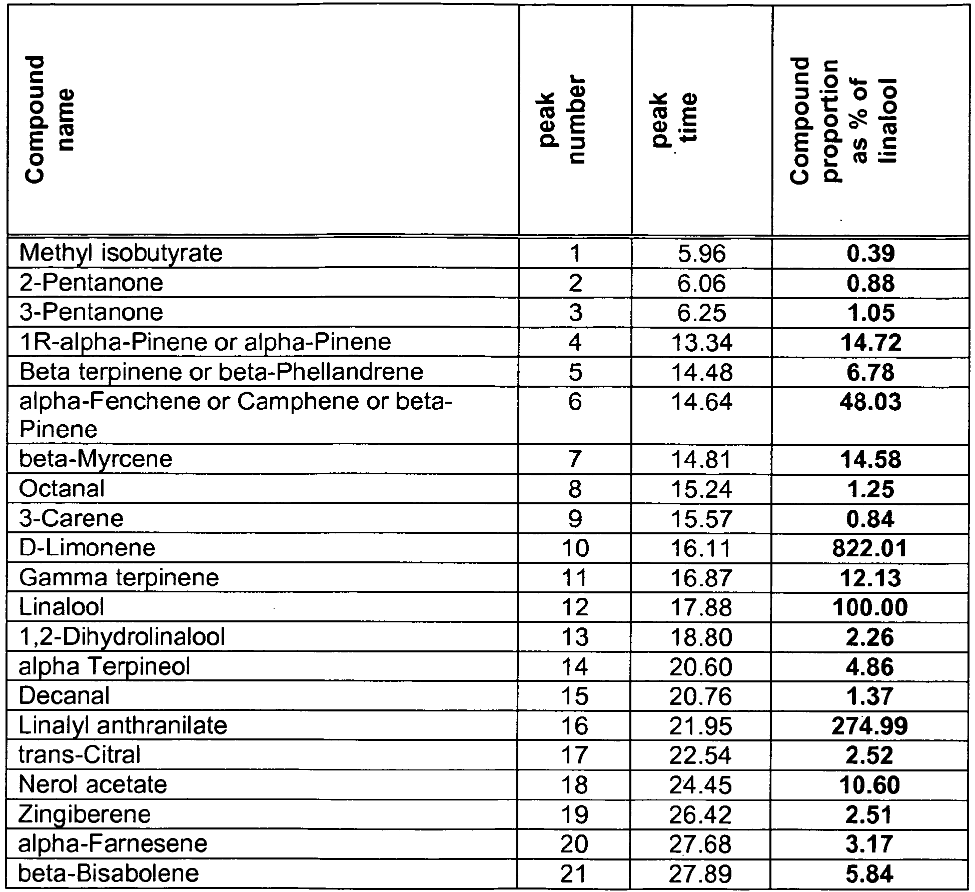

According to another aspect of the present invention, there is provided the use of a vapour described above as an antimicrobial, wherein the vapour is antimicrobial against bacteria. In an embodiment, the bacteria are antibiotic-resistant bacteria. In another embodiment, the bacteria are Gram-postive or Gram-negative bacteria.

In an embodiment, the bacteria are selected from *Enterococcus faecium, Enterococcus faecalis, Arcobacter butzleri, Campylobacter jejuni, Escherichia coli, Listeria monocytogenes, Clostridium difficile, Staphylococcus aureus* and MRSA. The *Enterococcus faecium* bacteria may be *Enterococcus faecium* NCTC 07171 and/or *Enterococcus faecium* NCTC 12202. The *Enterococcus faecalis* bacteria are *Enterococcus faecalis* NCTC 12697 and/or *Enterococcus faecalis* NCTC 12203. *Enterococcus faecium* NCTC 12202 and *Enterococcus faecalis* NCTC 12203 are examples of antibiotic-resistant bacteria.

In a further embodiment, the bacteria are spore-bearing bacteria. The vapour may be capable of destroying or inhibiting the growth of the spores, as well as being antimicrobial against the spore-bearing bacteria. In an embodiment, the spores are those of *Clostridium difficile* and/or *Bacillus cereus.*

In an embodiment, the bacteria are present in a foodstuff. Suitably, the vapour is used during the processing, packaging and/or storing of the foodstuff. In an embodiment, the foodstuff is salad, vegetables and/or fruit. The foodstuff may be subjected to the vapour for a period of time sufficient to have an antimicrobial effect on the foodstuff, for example a period of time ranging from 30 seconds to 1 hour, more particularly from 30 seconds to 30 minutes, even more particularly for a period of time ranging from 30 seconds to 5 minutes. Typically, the foodstuff is subjected to the vapour for a period of time ranging from 30 seconds to 1 minute. Preferably, the foodstuff is subjected to the vapour for a period of time of 45 seconds.

It is also disclosed that the vapour is antimicrobial against fungi. The fungi may be selected from *Aspergillus niger* (for example, ATCC 9642), *Penicillium chrysogenum* (for example, ATCC 10106) and *Alternaria alternate* (for example, CABI 127255).

In an embodiment, the vapours are used for sanitisation of the air and/or equipment in a food industry environment.

In another embodiment, the vapours are used for sanitisation of the air and/or equipment in a clinical environment.

In an embodiment, the vapour is used for sanitisation of a surface. The surface may be exposed to the vapour for a period of time ranging from 1 hour to 48 hours, preferably from 2 hours to 36 hours, more preferably from 5 hours to 24 hours and most preferably for 24 hours.

According to another aspect of the present invention, there is provided the use of a vapour described above as an antimicrobial against plant pathogens. The vapour is used in a greenhouse to protect the growing produce from plant pathogens. The plant pathogens may be, for example, bacterial, fungal or a mould.

### Description of Invention

The blend of the present invention consists of the oils of bergamot (*Citrus bergamia*) and orange (*Citrus sinensis).* The oils of bergamot and orange are the only components of the blend. In an embodiment, the oils are present in a ratio of 1:1 v/v. The vapour of the blend may be prepared by heating 15mg/l (15mg of oil for every litre of air) of the blend for around 15-minutes. GC-MS head space analysis of the major components in the air after a 15-minute accumulation of the vapours from the blend was performed using the following technique.

A 50ml syringe was used to extract air from the headspace and dissolved in 10ml of water; 1 µl was injected (split injection 50:1) into a Perkin-Elmer Turbomass' GC-MS with an injector temperature of 250 °C. The capillary column used was a Zebron ZB-5 with a column length of 30 m and diameter of 0.25 mm i.d., the carrier gas used was helium at a flow rate of 1 ml per min⁻¹. The initial temperature was 40°C for 3 minutes, with a ramp temperature of 8°C min⁻¹ and a final temperature of 240°C for 2 minutes, this was carried out for a total of 30 minutes. For GC/MS detection, an electron impact (EI) ionisation system, with ionisation energy of 70 eV with a M/z range of 50 to 450 Da, with a scan interval of 0.55 seconds, interscan delay of 0.15 seconds and a solvent delay of 3 minutes. NIST05 and AMDIS32 libraries were used for identification

The results are shown in Table 1.

**Table 1:**

| Components | m/z** | Counts/min |
|---|---|---|
| Methanol | 33 | 1279 |
| Ethanol | 47 | 391 |
| Acetone | 59 | 71682 |
| Isopropanol | 60 | 2236 |
| Fluoroacetic acid amine | 77 | 4505 |
| Trimethylsilyl fluoride | 92 | 58* |
| Dimethylsilanediol | 92 | 58* |
| 3-heptanone | 114 | 43 |
| Butylacetate | 116 | 110 |
| n-octanal | 128 | 57 |
| p-cymene | 134 | 342 |
| Limonene | 136 | 54440* |
| Alpha-pinene | 136 | 54440* |
| Alpha-phellandrene | 136 | 54440* |
| Camphene | 136 | 54440* |
| Thujene | 136 | 54440* |
| Beta pinene | 136 | 54440* |
| Myrcene | 136 | 54440* |
| Carene | 136 | 54440* |
| Nonanal | 142 | 36 |
| Nonanol | 144 | 36 |
| Citral | 154 | 186* |
| Linalool | 154 | 186* |
| 1-Fluorododecane | 188 | 27* |
| Bergamol | 196 | 26 |
| Linalyl isobutyrate | 224 | 25 |

| | | |
|---|---|---|
| * Combined peak for all components of the same molecular weight. ** m/z is the mass to charge ratio | | |

GC-MS analysis was also performed on the essential oil blend in liquid form, and the results are shown in Table 2.

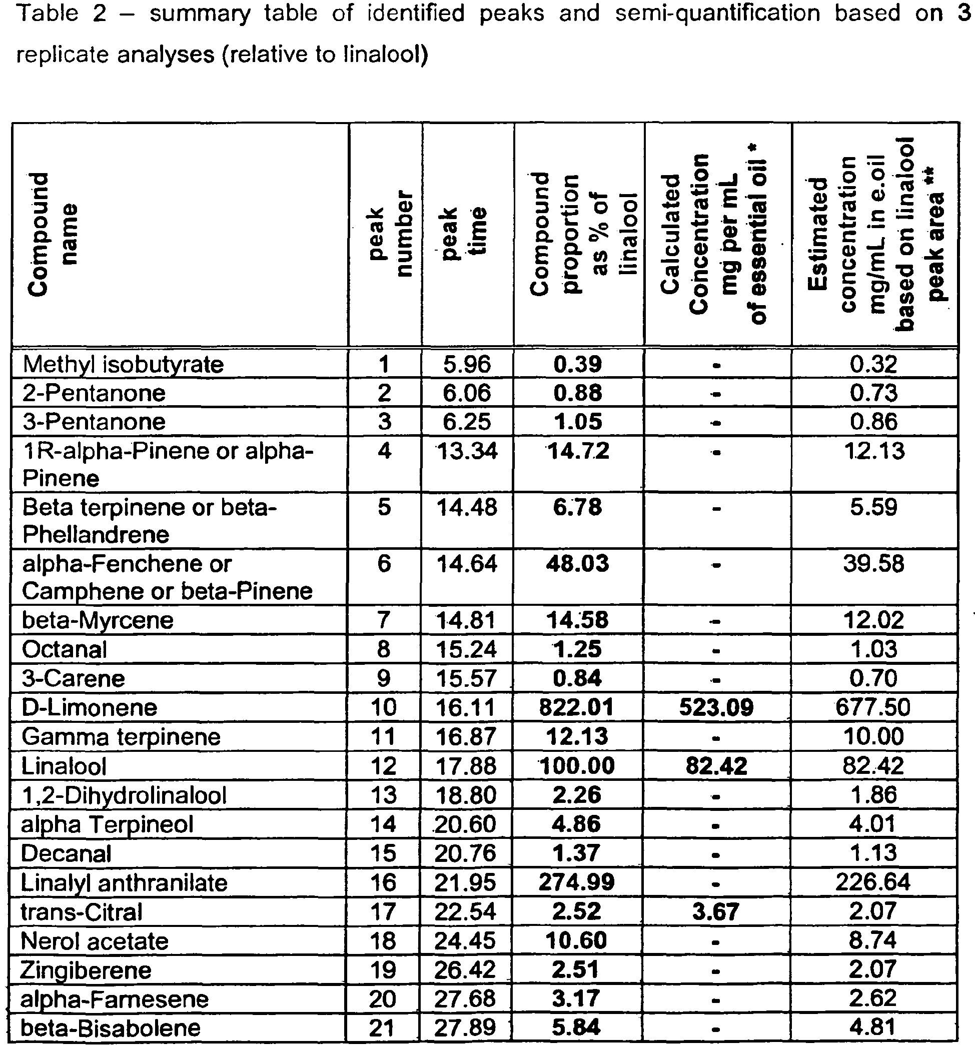

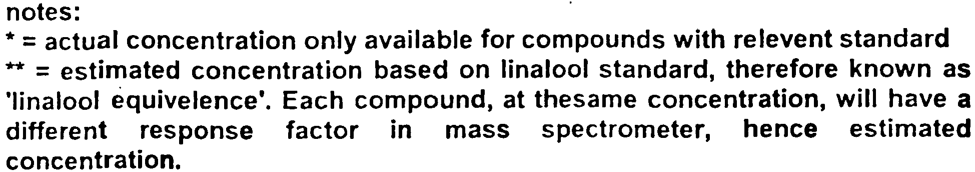

In use as an antimicrobial, the foodstuff to be subjected to the vapour may be exposed to the accumulation of vapours for, for example, 45 seconds. This treatment results in a significant decrease in contaminating pathogens.

The invention will now be illustrated by the following examples which are to be construed as non-limiting.

### Example 1

The screening of the vapours of the blend of bergamot (*Citrus bergamia)* and orange (*Citrus sinensis*) in a ratio of 1:1 v/v was carried out using a disc diffusion method in order to measure their ability to inhibit growth of overnight cultures (10⁸). Zones of inhibition were measured (diameter in cm).

The blend showed inhibition against *Enterococcus faecium:* 2.15cm, *Enterococcus faecalis:* 2.18cm, *Arcobacter butzleri:* 4.07cm, *Campylobacter jejuni:* 1.48cm, *Escherichia coli:* 0.5cm, *Listeria monocytogenes:* 2.05cm, *Clostridium difficile*: 2.34cm and spores: 3.53, *Staphylococcus aureus*: 1.25cm and *Bacillus cereus* spores: 3.97cm.

All of the following experiments were carried out on *E. faecium* and *E. faecalis* because they are established as faecal contamination indicator species and their vancomycin resistant strains (VRE) are important hospital acquired infections. Test organisms included: *Enterococcus faecalis* NCTC 12697, *Enterococcus faecium* NCTC 07171. Vancomycin resistant strains *Enterococcus faecalis* NCTC 12203, *Enterocoocus faecium* NCTC 12202.

### Example 2

Minimum Inhibitory Dose (MID) for the vapour from a blend of bergamot *(Citrus bergamia)* and orange (*Citrus sinensis*) in a ratio of 1:1 v/v was established using a vapour chamber method (Inouye, S., Takizawa, T. & Yamaguchi, H. (2001) Antibacterial activity of essential oils and their major constituents against respiratory tract pathogens by gaseous contact, Journal of Antimicrobial Chemotherapy, 47, 565-573). Aliquots (0.1 ml) of each antimicrobial were spotted onto 3 cm diameter filter paper discs (quick evaporation) in twofold dilutions of 1600, 800, 400, 200, 100 and 50mg/L. The discs and inoculated plates (0.1 ml spread plated approximately 10⁸ cells) were placed in a 1.3L airtight beaker, incubated at 25°C, 37°C, and 50°C for 24 hours. The MID was the lowest concentration that inhibited bacterial growth. A control was a vapour chamber with no paper disc added.

Overall, the EO blend vapour had greater inhibition at 50°C than at 25°C or 37°C, with the blend being effective against *E. faecium* with an MID of 400 mg/l and 100mg/l against *E. faecalis,* illustrating one of its use in horticultural greenhouses, due to the temperatures required to make the blend most effective.

### Example 3

MID were established by the same method as example 2 against vancomycin resistant *E. faecium* and *E. faecalis.*

The MID required to inhibit the growth of the vancomycin resistant strain *E . faecalis* was the same as that of the susceptible strain but the dose required for inhibition of the *E. faecium* vancomycin resistant strain was reduced from 400 mg/l to 200 mg/l, demonstrating that the vapour is the same if not better at inhibiting the growth of antibiotic resistant bacterial strains.

### Example 4

Reduction of growth *in vitro* was assessed against strains (resistant and susceptible) grown in Brain Heart Infusion (BHI) broth with an initial inoculum of 10⁶ cells with the

MID of the blend at either 25°C or 37°C or 50°C. Samples were taken at various time intervals, plated onto BHI agar and incubated for 24 hours at 37°C. Controls were growth without the presence of the vapours.

No growth was detectable in the vapour experiments at 50°C and pH 7.5 or pH 9.5 after 48 hours, against the antibiotic susceptible strains thus demonstrating a 10 log reduction in growth, the reduction in growth became significant between 2 and 4 hours (*p* = 0.001). The vapours only inhibited growth of the resistant strains by 4.5 log.

This example again illustrates one of the uses of the blend's vapours in environments with high temperatures such as greenhouses and the ability of the vapours to inhibit antibiotic resistant strains.

### Example 5

The use of diffusers at low temperatures was assessed in a larger space: a 600L sealed unit. Concentrations of 5, 10, 15 and 30 mg/l of the blend of bergamot (*Citrus bergamia)* and orange (*Citrus sinensis*) in a ratio or 1:1 v/v were diffused via either a heat or fan diffuser (AMPHORA, UK). BHI agar plates adjusted to either pH 5.5, 7.5 or 9.5 were spread with 0.1 µl of overnight culture (10⁷cfu/ml) of *E*. *faecalis* or *E*. *faecium* vancomycin resistant or susceptible strains and placed in the unit for 24 hrs at either 37°C or 25°C and inhibition assessed.

All concentrations via the fan diffuser and 5, 10, 30 mg/l via the heat diffuser did not have any effect on growth. The combination of the heat diffuser and 15mg/l of the blend reduced growth although complete inhibition was not observed. The use of the heat diffuser made the blend vapour an effective antimicrobial at low temperatures and also reduced the quantity of oil needed from 50 mg/l to 15 mg/l, demonstrating uses within the food/clinical arena as an antimicrobial on room/equipment sanitisation (especially as the blend vapour have been shown to be effective against spores) and processing/packing of foodstuff.

### Example 6

Assessment of growth *in vitro* was carried out by inoculating BHI broth with *E. faecalis* or *E. faecium* vancomycin resistant or susceptible strains (10⁶cfu/ml) and incubating at 37°C or 25°C in the vapour chamber with 15mg/l of the EO blend being diffused by the heat diffuser. Samples were taken every 15 minutes for the first hour and then hourly for eight hours and again at 24 hours. These were plated using onto BHI agar and incubated for 24 hours at 37°C. The control was the use of the diffusers without any EO blend added. The reduction in growth of all strains over 48hrs was approximately 0.5 log cfu/ml.

### Example 7

On-food vapour model using lettuce and cucumber as examples of fresh produce.

Squares of 2cm x 2cm of iceberg lettuce and cucumber skins were taken and left under UV light for 30 minutes to remove any competing microflora. The samples were inoculated with 50 µl of an overnight culture diluted with BHI broth to 10⁵ or 10⁸ cfu/ml and left to dry for 20 minutes. The inoculated food samples were placed in a 6001 vapour chamber and subjected to the 15mg/l of orange/bergamot blend vapour (the orange/bergamot in a ratio of 1:1 v/v) via a heat diffuser at 25°C for 15, 30, 45 and 60 seconds after a 15 min accumulation of vapour within the chamber. Food samples were then placed in 10 ml of PBS solution, stomached for 30 seconds, plated onto BHI agar and incubated for 24 hrs at 37°C. Un-inoculated samples after the initial UV sterilisation treatment were also placed in 10ml of PBS, stomached and plated to assess the remaining contamination levels.

The reduction of contamination of both the antibiotic resistant and susceptible strains on the lettuce and the cucumber was significantly greater at 45 seconds compared to 15, 30 and 60 seconds. Reductions at 45 seconds from 10⁵ cfu/ml and 10⁸ cfu/ml on lettuce are as follows: antibiotic susceptible *E. faecium* 1.4 & 4.4 Log₍₁₀₎, / ml *E*. *faecalis* 2.37 & 3.85 Log₍₁₀₎ cfu/ml and on the antibiotic resistant strains *E. faecium* 2.28 & 3.8 Log₍₁₀₎ cfu/ml, *E*. *faecalis* 2.03 & 3.99 Log₍₁₀₎ cfu/ml. On cucumber, the reductions in contamination from 10⁵/ml and 10⁸/ml from 45 seconds' exposure are: antibiotic susceptible *E. faecium* 1.58 & 3.69 Log₍₁₀₎ cfu/ml , *E. faecalis* 1.05 & 4.14 Log ₍₁₀₎ cfu and on antibiotic resistant strains *E. faecium* 2.06 & 3.78 Log₍₁₀₎ cfu/ml and *E. faecalis* 2.02 & 3.95 Log₍₁₀₎ cfu/ml.

The results demonstrate that the vapours are effective at reducing the contamination levels of fresh foodstuffs' surfaces in a 45 second period against both antibiotic and susceptible strains at low temperatures thus having applications in the processing/packaging of fresh produce.

### Example 8

Cucumber and lettuce were exposed to 15mg/L of the blend vapour for 45 seconds after 15 minutes accumulation of the vapour, a triangle forced choice procedure was carried out using a sensory panel consisting of a minimum of 28 participants, to see if the panel could distinguish between those foodstuffs that had been subjected to the vapours and the controls that had not, α risk was calculated with significance set at *p* = 0.05.

There was no significant difference in the taste of the treated and untreated foodstuff with the α risk of lettuce and cucumbers being 0.62528 and 0.5157 respectively, illustrating that the use of the blend vapour on fresh produce does not affect taste.

### Example 9

Fungi screening was carried out as follows.
a) the antimicrobial vapour of a blend of bergamot *(Citrus bergamia)* and orange *(Citrus sinensis)* in a ratio of 1:1 v/v has been screened using the disc diffusion method against spores and mycelium growth against post-harvest pathogens of, *Aspergillus niger* (ATCC 9642), *Penicillium chrysogenum* (ATCC 10106) and *Alternaria alternate* (CABI 127255) a 100% inhibition of mycelium growth was observed against all organisms and inhibition (cm) of growth of 5.97, 5.46 and 6.22 respectively against their spores.
b) In larger spaces of 600L the inhibition of mycelia growth when exposed to 15mg/L air of the vapour for 15 minutes is 44% for *Penicillium chrysogenum,* and 67% and 34% for *Aspergillus niger* and *Alternaria alternate* respectively.

Thus, the vapour of the present invention is an effective antifungal agent against both vegetative cells and spores. The vapour therefore, has application in food growth (Greenhouses), processing and storage, to prevent fungal contamination and loss of production from post harvest pathogens.

### Example 10

MRSA Screening was carried out as follows.

The antimicrobial vapour of a blend of bergamot (*Citrus bergamia*) and orange (*Citrus sinensis*) in a ratio of 1:1 v/v has been screened using the disc diffusion method against MRSA (NCTC 13297), with an inhibition zone of 2.7 cm.

Thus, this example provides further evidence that the vapour of the present invention is effective against antibiotic resistant organisms.

### Example 11

On-surface investigations were carried out as follows.

Steel discs (2cm diameter) were inoculated with 20µl of overnight culture of either vancomycin susceptible or vancomycin resistant *E*. *faecium* or *E*. *faecalis* or MRSA and allowed to dry for 20 minutes. Discs were then placed in a 600L vapour chamber and subjected to 15mg/L air of the vapour from a blend of bergamot (*Citrus bergamia)* and orange (*Citrus sinensis*) in a ratio of 1:1 v/v via a heat diffuser for different time interval (15 minutes, 1, 2, 4, 15 and 24 hours). The discs were then placed in 50ml-covered beakers containing 5g of glass beads (inoculated side of disc touching the beads) and 10ml of PBS and shaken for 1 minute at 150 rpm. The PBS solution was then spiral plated onto BHI agar, plates incubated at 37°C for 24 hours and viable counts determined. The controls were surfaces that had not been exposed to the orange/bergamot essential oil blend vapour.

The results showed the vapour was most effective after 24 hours' exposure with Log₍₁₀₎ reductions of 3.14, 1.45, 1.99, 1.81 and 1.78 for vancomycin susceptible *E. faecalis,* vancomycin susceptible *E. faecium,* vancomycin resistant *E*. *faecium,* vancomycin resistant *E. faecalis* and MRSA respectively.

Thus, the vapour of the present invention can reduce bacterial load on surfaces in both a clinical and food arena by 99% to 99.9% against both antibiotic resistant and susceptible bacteria over 24 hrs.

### Mechanisms of Action

Preliminary studies of the mechanism of action of the blends vapours have been carried out against antibiotic susceptible *E*. *faecium* and *E. faecalis.* The cells were assessed before and after being exposed to 15mg/l of the blend vapour for 1 hour at 37°C via a heat diffuser. The mechanism of action methods included:
- Assessment of membrane permeability with a NPN assay
- Determination of intra and extracellular ATP concentrations using luminescence FLAA-1 KT assay kit (Sigma, UK)
- Influence of the blends vapours on membrane potential and intracellular pH measurements using 3,3-dipropylthiacarbocyanine and carboxyflurescein diacetate succinimidyl ester florescence respectively.
- The use of transmission electron microscopy (TEM) to evaluate morphological changes to the cell.

The investigations showed that the vapours increased cell permeability by 32- 40 times, the membrane potential of the cells is reduced from 35 -12.61 a.u. and 45 -14.97 a.u. in

*E. faecium* and *E. faecalis* respectively. Increased permeability of the cells and loss of membrane potential leads to loss of intracellular ATP in both *E*. *faecalis* and *E. faecium* from approximately 35 pmol/mg protein to undetectable levels. This is coupled with a decrease in intracellular pH in *E*. *faecium* from 6.34 to 5.32 pH and in *E. faecalis* from 6.51 to 4.25 pH. Morphological changes occur in the cells including a loss of distinction of the membrane and an elongated shape.

Without wishing to be bound by theory, the results indicate that one of the possible modes of action of citrus blend vapours against microrganisms is through increasing the permeability of the cell membrane.

## Claims

1. A vapour of a blend consisting of the oil of orange *(Citrus sinensis)* and the oil of bergamot.

2. A vapour according to claim 1, wherein the vapour comprises the following components: methanol, ethanol, acetone, isopropanol, fluoroacetic acid amine, trimethylsilyl fluoride, dimethylsilanediol, 3-heptanone, butylacetate, n-octanal, p-cymene, limonene, alpha-pinene, alpha-phellandrene, camphene, thujene, beta pinene, myrcene, carene, nonanat, nonanol, citral, linalool, 1-fluorododecane, bergamol and linalyl isobutyrate.

3. A vapour according to claim 1 or 2, wherein the orange oil and bergamot oil are present in the blend in a ratio of 1:1 volume:volume.

4. A vapour according to claim 1, 2 or 3, wherein the vapour has the following 20 major components according to GCMS:
| Components | m/z** | Counts/min |
|---|---|---|
| Methanol | 33 | 1279 |
| Ethanol | 47 | 391 |
| Acetone | 59 | 71682 |
| Isopropanol | 60 | 2236 |
| Fluoroacetic acid amine | 77 | 4505 |
| Trimethylsilyl fluoride | 92 | 58* |
| Dimethylsilanediol | 92 | 58* |
| 3-heptanone | 114 | 43 |
| Butylacetate | 116 | 110 |
| n-octanal | 128 | 57 |
| p-cymene | 134 | 342 |
| Limonene | 136 | 54440* |
| Alpha-pinene | 136 | 54440* |
| Alpha-phellandrene | 136 | 54440* |
| Camphene | 136 | 54440* |
| Thujene | 136 | 54440* |
| Beta pinene | 136 | 54440* |
| Myrcene | 136 | 54440* |
| Carene | 136 | 54440* |
| Nonanal | 142 | 36 |
| Nonanol | 144 | 36 |
| Citral | 154 | 186* |
| Linalool | 154 | 186* |
| 1-Fluorododecane | 188 | 27* |
| | | |
| Bergamol | 196 | 26 |
| Linalyl isobutyrate | 224 | 25 |
| | | |
|---|---|---|
| ** Combined peak for all components of the same molecular weight. ** m/z = mass to charge ratio | | |

5. A process for preparing a vapour of a blend consisting of the oil of orange *(Citrus sinensis)* and the oil of bergamot as defined in any preceding claim, the process comprising heating the blend to a temperature of 30 to 50 °C for a period of time of ranging from 10 minutes to 20 minutes, preferably the blend is heated for 15 minutes.

6. Use of a vapour according to any one of claims 1 to 4 as an antimicrobial, wherein the vapour is antimicrobial against bacteria.

7. Use according to claim 6, wherein, the bacteria are antibiotic-resistant bacteria.

8. Use according to claim 7, wherein the bacteria are selected from *Enterococcus faecium, Enterococcus faecalis, Arcobacter butzleri, Campylobacter jejuni, Escherichia coli, Listeria monocytogenes, Clostridium difficile, Staphylococcus aureus* and MRSA, preferably the *Enterococcus faecium* bacteria are *Enterococcus faecium* NCTC 07171 and/or *Enterococcus faecium* NCTC 12202 and preferably the *Enterococcus faecalis* bacteria are *Enterococcus faecalis* NCTC 12697 and/or *Enterococcus faecalis* NCTC 12203.

9. Use according to claim 7, wherein the bacteria are spore-bearing bacteria, preferably the spore-bearing bacteria are *Clostridium difficile* and/or *Bacillus cereus.*

10. Use according to claim 9, wherein the vapour is capable of destroying or inhibiting the growth of the spores.

11. Use according to any one of claims to 7 to 10, wherein the bacteria are present in a foodstuff and wherein the vapour is used during the processing, packaging and/or storing of the foodstuff.

12. Use according to claim 11, wherein the foodstuff is salad, vegetables and/or fru it.

13. Use according to claim 11 or 12, wherein the foodstuff is subjected to the vapour for a period of time ranging from 30 seconds to 1 minute, preferably the foodstuff is subjected to the vapour for a period of time of 45 seconds.

14. Use according to any one of claims 6 to 10, wherein the vapour is used for sanitisation of the air and/or equipment in a food industry environment or is used for sanitisation of the air and/or equipment in a clinical environment.

15. Use according to claim 6, wherein the vapour is antimicrobial against plant pathogens, preferably the vapour is used in a greenhouse.

## Patentansprüche

1. Dampf einer Mischung, bestehend aus dem Öl der Orange (*Citrus sinensis*) und dem Öl der Bergamotte.

2. Dampf nach Anspruch 1, wobei der Dampf die folgenden Komponenten umfasst: Methanol, Ethanol, Aceton, Isopropanol, Fluoressigsäure-Amin, Trimethylsilylfluorid, Dimethylsilandiol, 3-Heptanon, Butylacetat, n-Octanal, p-Cymen, Limonen, α-Pinen, α-Phellandren, Camphen, Thujen, β-Pinen, Myrcen, Caren, Nonanal, Nonanol, Citral, Linalool, 1-Fluordodecan, Bergamol und Linalylisobutyrat.

3. Dampf nach Anspruch 1 oder 2, wobei das Orangenöl und das Bergamottenöl in der Mischung in einem Volumenverhältnis von 1:1 vorliegen.

4. Dampf nach Anspruch 1, 2 oder 3, wobei der Dampf die folgenden Hauptkomponenten nach der GCMS aufweist:
| Komponenten | m/z** | cpm (Counts/min) |
|---|---|---|
| Methanol | 33 | 1279 |
| Ethanol | 47 | 391 |
| Aceton | 59 | 71682 |
| Isopropanol | 60 | 2236 |
| Fluoressigsäure-Amin | 77 | 4505 |
| Trimethylsilylfluorid | 92 | 58* |
| Dimethylsilandiol | 92 | 58* |
| 3-Heptanon | 114 | 43 |
| Butylacetat | 116 | 110 |
| n-Octanal | 128 | 57 |
| p-Cymen | 134 | 342 |
| Limonen | 136 | 54440* |
| α-Pinen | 136 | 54440* |
| α-Phellandren | 136 | 54440* |
| Camphen | 136 | 54440* |
| Thujen | 136 | 54440* |
| β-Pinen | 136 | 54440* |
| Myrcen | 136 | 54440* |
| Caren | 136 | 54440* |
| Nonanal | 142 | 36 |
| Nonanol | 144 | 36 |
| Citral | 154 | 186* |
| Linalool | 154 | 186* |
| 1-Fluordodecan | 188 | 27* |
| | | |
| Bergamol | 196 | 26 |
| Linalylisobutyrat | 224 | 25 |
| | | |
|---|---|---|
| * Kombinierter Peak für alle Komponenten des gleichen Molkekulargewichts. ** m/z = Verhältnis von Masse zu Ladung | | |

5. Verfahren zur Herstellung eines Dampfes von einer Mischung, bestehend aus dem Öl der Orange (*Citrus sinensis*) und dem Öl der Bergamotte wie nach einem vorangehenden Anspruch definiert, wobei das Verfahren das Erhitzen der Mischung auf eine Temperatur von 30 bis 50 °C für eine Zeitdauer umfasst, die im Bereich von 10 Minuten bis 20 Minuten liegt, die Mischung bevorzugt 15 Minuten erhitzt wird.

6. Verwendung eines Dampfes nach einem der Ansprüche 1 bis 4 als ein antimikrobielles Mittel, wobei der Dampf antimikrobiell gegen Bakterien ist.

7. Verwendung nach Anspruch 6, wobei die Bakterien Antibiotika-resistente Bakterien sind.

8. Verwendung nach Anspruch 7, wobei die Bakterien ausgewählt sind aus *Enterococcus faecium, Enterococcus faecalis, Arcobacter butzleri, Campylobacter jejuni, Escherichia coli, Listeria monocytogenes, Clostridium difficile, Staphylococcus aureus* und MRSA, die *Enterococcus* faecium-Bakterien bevorzugt *Enterococcus faecium* NCTC 07171 und/oder *Enterococcus faecium* NCTC 12202 sind und die *Enterococcus* faecalis-Bakterien bevorzugt *Enterococcus faecalis* NCTC 12697 und/oder *Enterococcus faecalis* NCTC 12203 sind.

9. Verwendung nach Anspruch 7, wobei die Bakterien sporentragende Bakterien sind, die sporentragenden Bakterien bevorzugt *Clostridium difficile* und/oder *Bacillus cereus* sind.

10. Verwendung nach Anspruch 9, wobei der Dampf zum Abtöten oder Inhibieren des Sporenwachstums fähig ist.

11. Verwendung nach einem der Ansprüche 7 bis 10, wobei die Bakterien in einem Nahrungsmittel vorliegen und wobei der Dampf während der Verarbeitung, Verpackung und/oder der Lagerung des Nahrungsmittels verwendet wird.

12. Verwendung nach Anspruch 11, wobei das Nahrungsmittel Salat, Gemüse und/oder Obst ist.

13. Verwendung nach Anspruch 11 oder 12, wobei das Nahrungsmittel dem Dampf für eine Zeitdauer ausgesetzt wird, die im Bereich von 30 Sekunden bis 1 Minute liegt, das Nahrungsmittel dem Dampf bevorzugt für eine Zeitdauer von 45 Sekunden ausgesetzt wird.

14. Verwendung nach einem der Ansprüche 6 bis 10, wobei der Dampf zur Sanitisierung der Luft und/oder von Geräten in einer Umgebung in der Nahrungsmittelindustrie verwendet wird oder zur Sanitisierung der Luft und/oder von Geräten in einer klinischen Umgebung verwendet wird.

15. Verwendung nach Anspruch 6, wobei der Dampf antimikrobiell gegen Pflanzenpathogene wirkt, der Dampf bevorzugt in einem Treibhaus verwendet wird.

## Revendications

1. Vapeur d'un mélange constitué de l'huile d'orange (*Citrus sinensis*) et de l'huile de bergamote.

2. Vapeur selon la revendication 1, la vapeur comprenant les composants suivants : du méthanol, de l'éthanol, de l'acétone, de l'isopropanol, de l'amine d'acide fluoroacétique, du fluorure de triméthylsilyle, du diméthylsilanediol, de la 3-heptanone, de l'acétate de butyle, du n-octanal, du p-cymène, du limonène, de l'alpha-pinène, de l'alpha-phellandrène, du camphène, du thujène, du bêta-pinène, du myrcène, du carène, du nonanal, du nonanol, du citral, du linalol, du 1-fluorododécane, du bergamol et de l'isobutyrate de linalyle.

3. Vapeur selon la revendication 1 ou 2, dans laquelle l'huile d'orange et l'huile de bergamote sont présentes dans le mélange en un rapport de 1:1 en volume:volume.

4. Vapeur selon la revendication 1, 2 ou 3, la vapeur ayant les composants principaux suivants selon la GCMS :
| Composants | m/z** | Comptage/min |
|---|---|---|
| Méthanol | 33 | 1 279 |
| Éthanol | 47 | 391 |
| Acétone | 59 | 71 682 |
| Isopropanol | 60 | 2 236 |
| Amine d'acide fluoroacétique | 77 | 4 505 |
| Fluorure de triméthylsilyle | 92 | 58* |
| Diméthylsilanediol | 92 | 58* |
| 3-Heptanone | 114 | 43 |
| Acétate de butyle | 116 | 110 |
| n-Octanal | 128 | 57 |
| p-Cymène | 134 | 342 |
| Limonène | 136 | 54 440* |
| Alpha-pinène | 136 | 54 440* |
| Alpha-phellandrène | 136 | 54 440* |
| Camphène | 136 | 54 440* |
| Thujène | 136 | 54 440* |
| Bêta-pinène | 136 | 54 440* |
| Myrcène | 136 | 54 440* |
| Carène | 136 | 54 440* |
| Nonanal | 142 | 36 |
| Nonanol | 144 | 36 |
| Citral | 154 | 186* |
| Linalol | 154 | 186* |
| 1-Fluorododécane | 188 | 27* |
| | | |
| Bergamol | 196 | 26 |
| Isobutyrate de linalyle | 224 | 25 |
| | | |
|---|---|---|
| * Pic combiné pour tous les composants de même masse moléculaire ** m/z = rapport masse sur charge. | | |

5. Procédé pour la préparation d'une vapeur d'un mélange constitué de l'huile d'orange *(Citrus sinensis)* et de l'huile de bergamote telle que définie dans l'une quelconque des revendications précédentes, le procédé comprenant le chauffage du mélange à une température de 30 à 50 °C pendant une durée allant de 10 minutes à 20 minutes, de préférence le mélange étant chauffé pendant 15 minutes.

6. Utilisation d'une vapeur selon l'une quelconque des revendications 1 à 4 comme produit antimicrobien, la vapeur étant antimicrobienne vis-à-vis de bactéries.

7. Utilisation selon la revendication 6, les bactéries étant des bactéries résistantes aux antibiotiques.

8. Utilisation selon la revendication 7, les bactéries étant choisies parmi *Enterococcus faecium, Enterococcus faecalis, Arcobacter butzleri, Campylobacter jejuni, Escherichia coli, Listeria monocytogenes, Clostridium difficile, Staphylococcus aureus* et le SARM, de préférence les bactéries *Enterococcus faecium* étant *Enterococcus faecium* NCTC 07171 et/ou *Enterococcus faecium* NCTC 12202 et de préférence les bactéries *Enterococcus faecalis* étant *Enterococcus faecalis* NCTC 12697 et/ou *Enterococcus faecalis* NCTC 12203.

9. Utilisation selon la revendication 7, les bactéries étant des bactéries sporulées, de préférence les bactéries sporulées étant *Clostridium difficile* et/ou *Bacillus cereus.*

10. Utilisation selon la revendication 9, la vapeur étant capable de détruire ou inhiber la croissance des spores.

11. Utilisation selon l'une quelconque des revendications 7 à 10, les bactéries étant présentes dans un aliment et la vapeur étant utilisée pendant le traitement, l'emballage et/ou le stockage de l'aliment.

12. Utilisation selon la revendication 11, l'aliment étant une salade, des légumes et/ou un fruit.

13. Utilisation selon la revendication 11 ou 12, l'aliment étant soumis à la vapeur pendant une durée allant de 30 secondes à 1 minute, de préférence l'aliment étant soumis à la vapeur pendant une durée de 45 secondes.

14. Utilisation selon l'une quelconque des revendications 6 à 10, la vapeur étant utilisée pour la désinfection de l'air et/ou de matériel dans un environnement d'industrie alimentaire ou étant utilisée pour la désinfection de l'air et/ou de matériel dans un environnement clinique.

15. Utilisation selon la revendication 6, la vapeur étant antimicrobienne vis-à-vis de phytopathogènes, de préférence la vapeur étant utilisée dans une serre.
